# EUROPÄISCHE PATENTSCHRIFT

(11) **EP 1 478 546 B1**
(45) Veröffentlichungstag und Bekanntmachung des Hinweises auf die Patenterteilung: **20.07.2011**
(21) Anmeldenummer: 03704275.1
(22) Anmeldetag: 31.01.2003
(51) Int. Cl.: B60Q 1/26, B60R 1/12

(54) **VORRICHTUNG ZUR ANZEIGE BEI EINEM KRAFTFAHRZEUG**
DISPLAY DEVICE FOR A MOTOR VEHICLE
DISPOSITIF DE SIGNALISATION POUR VEHICULE MOTEUR

(30) Priorität: 21.02.2002 DE 10207475; 24.05.2002 DE 10223119
(43) Veröffentlichungstag der Anmeldung: 24.11.2004
(73) Patentinhaber: ROBERT BOSCH GMBH, 70442 Stuttgart (DE)
(72) Erfinder: HAAG, Peter, 74842 Billigheim (DE)
(86) Internationale Anmeldenummer: PCT/DE2003/000272
(87) Internationale Veröffentlichungsnummer: WO 2003/072393

(56) Entgegenhaltungen:
- EP-A- 1 053 911
- DE-A- 4 015 329
- FR-A- 1 461 419
- FR-A- 2 798 335
- US-A- 2 461 315

## Beschreibung

### Stand der Technik

Die Erfindung betrifft eine Vorrichtung zur Anzeige bei einem Kraftfahrzeug

In der Kraftfahrzeugtechnik gibt es eine Vielzahl von Funktionen, welche Anzeigen bedienen, beispielsweise Warnlampen. Ein Beispiel für eine solche Funktion ist ein Tote-Winkel-Detektionssystem, wie es beispielsweise in der noch nicht veröffentlichten deutschen Patentanmeldung 101 25 426.1 vom 25.05.2001 beschrieben ist. Mittels Sensoren, beispielsweise Radarsensoren, werden bei diesem Detektionssystem Verkehrsteilnehmer im Tote-Winkel-Bereich erkannt und bei erkanntem Verkehrsteilnehmer in diesem Bereich eine Warnleuchte betätigt, die üblicherweise im Innenraum im Bereich des Außenspiegels an der A-Säule des Fahrzeugs montiert ist.

Andere Funktionen, die Anzeigen bedienen, sind beispielsweise Einparkhilfen oder ähnliches, bei denen der Abstand zu einem rückwärtigen Fahrzeug visualisiert wird und/oder ein Warnlampe betätigt wird, wenn der Abstand eine Minimalwert unterschreitet.

Derartige Anzeigen sind aufgrund ihrer Aufgabe so zu gestalten, dass sie vom Fahrer in der jeweiligen Situation nicht übersehen werden. Dies könnte z.B. bei einem Tote-Winkel-Detektionssystem bei dem Anbringen der Warnleuchte im Bereich der A-Säule oder bei Einparkhilfen bei Anzeigen im Bereich des Kombiinstruments des Fahrzeugs jedoch der Fall sein.

Die US 2,461,315 zeigt einen von hinten beleuchtbaren Spiegel, bei welchem das Spiegelglas durch einen Ring eingefasst ist, der bei Ausleuchtung des Spiegelgehäuses durch eine Lampe hinter dem Spiegel beleuchtet wird.

Die FR 1461419 zeigt die Verwendung eines transparenten Randes welcher durch eine Lampe im Gehäuse des Spiegels durchleuchtet wird.

Die EP 105 3 911 beschreibt ein transparentes Spiegelglas, welches mittels einer hinter dem Spiegelglas angeordneten Lampe durchleuchtet wird.

### Vorteile der Erfindung

Der wesentliche Vorteil, Leuchtelemente zur Anzeige derart anzuordnen, dass ein Spiegelgehäuse indirekt ausgeleuchtet wird, ist darin zu sehen, dass zur Anzeige keine sichtbaren Bauteile erforderlich sind, ebenso wenig Sonderbauteile, wie beispielsweise halbdurchlässige Spiegelgläser. Damit können undurchlässige Spiegelgläser weiterhin eingesetzt werden. Weiter vorteilhaft ist, dass Heizfolien zur Enteisung der Spiegel im Winter, weiterhin verwendbar sind. Ebenso vorteilhaft ist, dass keine umfangreichen Modifikationen am Spiegelgehäuse notwendig sind, speziell falls die Anzeigeelemente von hinten an das Spiegelglas eines Spiegels angebracht werden. Außerdem kann somit eine Anzeige mit hoher Leuchtstärke bei geringem Energieverbrauch realisiert werden, ohne den Fahrer zu blenden.

Besonders vorteilhaft ist die Art der Anzeige in Verbindung mit einem Tote-Winkel-Warnsystem, da bei einem Spurwechsel auch bei vorhandenem Warnsystem weiterhin der Blick des Fahrers in den Außenspiegel erforderlich ist, um weiter zurückliegende Fahrzeuge zu erkennen und gegebenenfalls einen Spurwechsel zu unterlassen. Die Anzeige erfolgt bei einem beabsichtigten Spurwechsel in dieser Anwendung daher im direkten Sichtfeld des Fahrers.

Besonders einfach werden die Leuchtelemente an das Spiegelglas mittels Kleben angebracht. In vorteilhafter Weise werden dabei helle Leuchtdioden verwendet, die eine besonders kostengünstige Realisierung bei hoher Leuchtstärke darstellen. Eine alternative oder zusätzliche Anordnung der Leuchtelemente besteht darin, dass die Leuchtelemente in das Spiegelgehäuse eingelassen sind, z.B. mittels einer Einpressfassung.

Besonders vorteilhaft ist die Verwendung mehrerer Leuchtelemente, welche im Außenbereich des Spiegels, bei einem Außenspiegel vorzugsweise an einem vom Fahrzeug abgewandten Teil des Außenspiegels angebracht sind. Dadurch wird eine besonders effektive Anzeige mit einer besonders hohen Warnwirkung für den Fahrer erreicht, die zugleich nicht im ständigen Sichtfeld des Fahrers liegt.

In anderen Anwendungen, beispielsweise bei Einparkhilfen, bei denen die Leuchtdioden im Innenrückspiegel und/oder im Außenspiegel angebracht werden können, zeigen sich die entsprechenden Vorteile.

Weitere Vorteile ergeben sich aus der nachfolgenden Beschreibung von Ausführungsbeispielen bzw. aus den abhängigen Patentansprüchen.

### Zeichnung

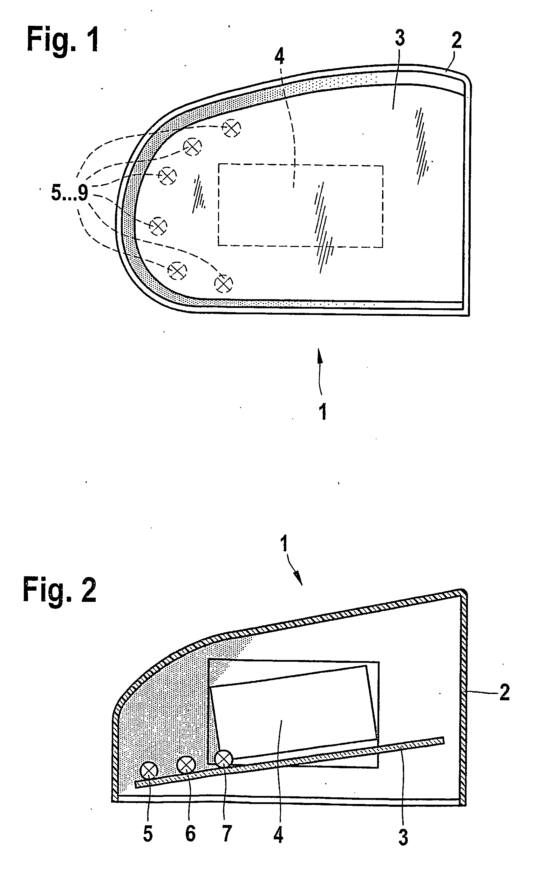

Die Erfindung wird nachfolgend anhand der in der Zeichnung dargestellten Ausführungsformen näher erläutert. Die Figuren 1 und 2 zeigen dabei eine Draufsicht auf und einen Schnitt durch einen Außenspiegel eines Kraftfahrzeugs, bei welchem Leuchtelemente am Spiegelglas angebracht sind.

### Beschreibung von Ausführungsbeispielen

Figur 1 zeigt einen Außenspiegel 1, welcher ein Spiegelgehäuse 2, ein Spiegelglas 3, einen Stellmotor 4 zur Verstellung des Spiegels sowie Leuchtelemente 5 bis 9 umfaßt. Die Leuchtelemente sind dabei in gezeigten Ausführungsbeispiel von hinten am Spiegelglas, d.h. auf der von Fahrer nicht sichtbaren Seite des Glases, angebracht, vorzugsweise geklebt. Diese Leuchtelement werden zur Warnung des Fahrer in bestimmten Situationen angesteuert, im bevorzugten Ausführungsbeispiel von einem Tote-Winkel-Detektionssystem, wenn dieses einen Verkehrsteilnehmer im toten Winkel des Fahrzeugs erkennt. In diesem Fall werden die Leuchtelemente zum Leuchten gebracht, wodurch der Fahrer durch die indirekte Beleuchtung des Spiegelgehäuses auf die Gefahr aufmerksam gemacht wird.

Im bevorzugten Ausführungsbeispiel sind die Leuchtelemente im Außenbereich des Außenspiegels auf der vom Kraftfahrzeug wegweisenden Seite angebracht. Dadurch wird zumindest dieser Teil des Innengehäuses des Spiegels ausgeleuchtet und durch eine entsprechende Beleuchtung des sichtbaren Randes des Gehäuses am Spiegelglas vorbei eine für den Fahrer erkennbare Anzeige bewerkstelligt. Der Abstand zwischen Gehäuse und Spiegelglas ist in der Regel in diesem Bereich am größten.

In anderen Ausführungen hat es sich als geeignet erwiesen, ergänzend oder alternativ andere Bereiche des Außenspiegels mit Leuchtelementen, eventuell auch in verschiedenen Farben, zu versehen. Dadurch wird eine andere, bei gleichmäßiger Verteilung der Leuchtelemente über die Spiegelglasfläche vollständige Ausleuchtung des Spiegelinnengehäuses erreicht und somit verschiedene Anzeigenmuster dargestellt. Bei der gleichmäßigen Verteilung z.B. wird eine Beleuchtung des gesamten Randes des Spiegelgehäuses erreicht. Bei der Verwendung unterschiedlicher Farben können somit unterschiedliche Informationen vermittelt werden.

Die Leuchtelemente 5 bis 9 stellen im bevorzugten Ausführungsbeispiel helle Leuchtdioden dar, die von hinten samt ihrer Zuleitungen an das Spiegelglas geklebt sind. Die Zuleitungen werden über den Stellmotor zusammen mit den Zuleitungen des Stellmotors in den Innenraum des Kraftfahrzeugs geführt.

Das Spiegelglas ist dabei lichtundurchlässig, so dass weiterhin eine Heizfolie zur Enteisung des Spiegels im Winter aufgebracht werden kann.

Figur 2 zeigt einen Schnitt durch den in Figur 1 dargestellten Außenspiegel in der Spiegelglasebene. Entsprechend sind ist das Gehäuse 2, der Spiegel 3, der Stellmotor 4 sowie Leuchtelementen 5, 6 und 7 dargestellt. Die Leuchtelemente 5, 6 und 7 sind von hinten an dem Spiegelglas 3 angebracht, vorzugsweise geklebt. Sie leuchten bei Ansteuerung das Spiegelgehäuse 2 im Rahmen des hellgrauen Bereichs aus, und zeigen so dem Fahrer durch die Beleuchtung des sichtbaren Randes des Gehäuses die gewünschte Information, z.B. eine Warnung über ein sich im toten Winkel befindlichen Verkehrsteilnehmers, an.

Anstelle der Anwendung in Verbindung mit einem Toten-Winkel-Detektionssystem werden entsprechende Anzeigenkonzepte in Verbindung mit anderen Funktionen, beispielsweise Einparkhilfen, etc. eingesetzt. Dies gilt für alle die Funktionen, bei denen davon auszugehen ist, dass der Fahrer in einen der Spiegel des Fahrzeugs zur Überwachung des rückwärtigen Bereichs des Fahrzeugs blickt. Die Anzeige ist dabei je nach Ausführung in einer geeigneten Auswahl der vorhandenen Spiegel oder in allen vorhandenen Spiegel eingesetzt.

Die Anzahl der verwendeten Leuchtelementen und ihre Art ist von der Anwendung abhängig. Im einfachsten Fall reicht ein Leuchtelement aus.

In einer anderen Ausführungsform wird alternativ oder ergänzend zur obigen Darstellung wenigstens eine Leuchtelement nicht am Spiegelglas angebracht, sondern in das Kunststoffspiegelgehäuse eingelassen, z.B. indem das wenigstens eine Leuchtelement, z.B. eine LED samt Anschlüsse, in die Form des Gehäuses einlegt und bei der Herstellung des Gehäuses mit Kunststoff umspritzt wird. Eine andere Möglichkeit besteht im Einbau des Leuchtelements in eine im Gehäuse vorgesehenen Einpressfassung, wobei vorzugsweise die Anschlüsse bereits im Gehäuse vorgesehen sind.

Wesentlich ist hier wie auch in vorhergehenden Ausführungsbeispiel, dass das wenigstens eine Leuchtelement derart angeordnet ist, dass das Spiegelgehäuse zumindest zum Teil ausgeleuchtet wird und auf diese Weise eine indirekte Beleuchtung der Innenseite des Gehäuses am Glas vorbei entsteht.

## Patentansprüche

1. Vorrichtung zur Anzeige bei einem Kraftfahrzeug mit wenigstens einem Leuchtelement (5, 6, 7), das zur Anzeige angesteuert wird, wobei das wenigstens eine Leuchtelement (5, 6, 7) innerhalb des Gehäuses (2) eines Spiegels eines Kraftfahrzeugs hinter einem lichtundurchlässigen Spiegelglas (3) angebracht ist, wobei das wenigstens eine Leuchtelement (5, 6, 7) derart angeordnet ist, dass eine indirekte Ausleuchtung der Innenseite des Gehäuses des Spiegels des Kraftfahrzeugs erfolgt, wobei ein räumlicher Abstand zwischen dem Ende des Spiegelglas (3) und der Innenfläche des Gehäuses (2) besteht, wobei ein Teil des Innengehäuses des Spiegels ausgeleuchtet und durch eine entsprechende Beleuchtung des sichtbaren Randes des Gehäuses am Spiegelglas vorbei eine für den Fahrer erkennbare Anzeige bewerkstelligt wird, **dadurch gekennzeichnet, dass** der Spiegel einen Stellmotor (4) zur Verstellung des Spiegelglases, aufweist.

2. Vorrichtung nach Anspruch 1, **dadurch gekennzeichnet, dass** der Spiegel ein Außenspiegel eines Kraftfahrzeugs ist.

3. Einrichtung nach einem der vorhergehenden Ansprüche, **dadurch gekennzeichnet, dass** das wenigstens eine Leuchtelement von hinten an das Spiegelglas angebracht, vorzugsweise geklebt ist.

4. Vorrichtung nach einem der vorhergehenden Ansprüche, **dadurch gekennzeichnet, dass** das wenigstens eine Leuchtelement eine helle Leuchtdiode ist.

5. Vorrichtung nach einem der vorhergehenden Ansprüche, **dadurch gekennzeichnet, dass** das wenigstens eine Leuchtelement derart angeordnet ist, dass es zumindest einen Teil des Spiegelgehäuses ausleuchtet.

6. Verfahren nach einem der vorhergehenden Ansprüche, **dadurch gekennzeichnet, dass** das wenigstens eine Leuchtelement angesteuert wird, wenn von einem Tote-Winkel-Detektionssystem ein Verkehrsteilnehmer im toten Winkel des Kraftfahrzeugs erkannt wird.

7. Vorrichtung nach einem der vorhergehenden Ansprüche, **dadurch gekennzeichnet, dass** das wenigstens eine Leuchtelement in einem vom Fahrzeug wegweisenden äußeren Teil des Außenspiegels angeordnet ist.

8. Vorrichtung nach einem der vorhergehenden Ansprüche, **dadurch gekennzeichnet, dass** das Spiegelglas undurchlässig ist und mit einer Heizfolie zur Enteisung im Winter bezogen ist.

9. Vorrichtung nach einem der vorhergehenden Ansprüche, **dadurch gekennzeichnet, dass** wenigstens ein Leuchtelement in das Gehäuse des Spiegels eingelassen ist, derart, dass es das Spiegelgehäuse zumindest zum Teil ausleuchtet.

## Claims

1. Apparatus for indicating in a motor vehicle, having at least one luminous element (5, 6, 7), which is driven for indicating purposes, wherein the at least one luminous element (5, 6, 7) is attached inside the housing (2) of a mirror in a motor vehicle behind an opaque mirror glass (3), wherein the at least one luminous element (5, 6, 7) is arranged such that the inside of the housing of the mirror in the motor vehicle is lit indirectly, wherein there is a spatial distance between the end of the mirror glass (3) and the inner surface of the housing (2), wherein part of the inner housing of the mirror is lit and an indication, which can be seen by the driver, is realized by way of appropriate illumination of the visible edge of the housing past the mirror glass, **characterized in that** the mirror has a servomotor (4) for adjusting the mirror glass.

2. Apparatus according to Claim 1, **characterized in that** the mirror is a wing-mirror of a motor vehicle.

3. Device according to one of the preceding claims, **characterized in that** the at least one luminous element is attached, preferably adhesively bonded, to the mirror glass from behind.

4. Apparatus according to one of the preceding claims, **characterized in that** the at least one luminous element is a bright light-emitting diode.

5. Apparatus according to one of the preceding claims, **characterized in that** the at least one luminous element is arranged such that it lights at least some of the mirror housing.

6. Method according to one of the preceding claims, **characterized in that** the at least one luminous element is driven when a blind-spot detection system identifies a road user in the blind spot of the motor vehicle.

7. Apparatus according to one of the preceding claims, **characterized in that** the at least one luminous element is arranged in an outer part of the wing-mirror that is remote from the vehicle.

8. Apparatus according to one of the preceding claims, **characterized in that** the mirror glass is non-permeable and has applied to it a heating film for the purpose of de-icing during winter.

9. Apparatus according to one of the preceding claims, **characterized in that** at least one luminous element is inserted into the housing of the mirror such that it lights at least some of the mirror housing.

## Revendications

1. Dispositif d'affichage pour véhicule automobile équipé d'au moins un élément d'éclairage (5, 6, 7) déclenché pour servir d'affichage, l'au moins un élément d'éclairage (5, 6, 7) étant amené à l'intérieur du boîtier (2) d'un rétroviseur d'un véhicule automobile derrière un verre de rétroviseur (3) opaque à la lumière, l'au moins un élément d'éclairage (5, 6, 7) étant disposé de façon à provoquer un éclairage indirect du côté intérieur du boîtier du rétroviseur du véhicule automobile, avec présence d'une certaine distance dans l'espace entre l'extrémité du verre de rétroviseur (3) et la surface intérieure du boîtier (2), une partie du boîtier intérieur du rétroviseur étant éclairée et un affichage reconnaissable du conducteur étant réalisé par un éclairage correspondant de la bordure visible du boîtier le long du verre de rétroviseur, **caractérisé en ce que** le rétroviseur comporte un moteur de réglage (4) pour régler le verre de rétroviseur.

2. Dispositif selon la revendication 1, **caractérisé en ce que** le rétroviseur est un rétroviseur extérieur d'un véhicule automobile.

3. Dispositif selon l'une quelconque des revendications précédentes, **caractérisé en ce que** l'au moins un élément d'éclairage est amené par derrière contre le verre de rétroviseur, de préférence collé.

4. Dispositif selon l'une quelconque des revendications précédentes, **caractérisé en ce que** l'au moins un élément d'éclairage est une diode d'éclairage claire.

5. Dispositif selon l'une quelconque des revendications précédentes, **caractérisé en ce que** l'au moins un élément d'éclairage est disposé de telle sorte qu'il éclaire au moins une partie du boîtier de rétroviseur.

6. Procédé selon l'une quelconque des revendications précédentes, **caractérisé en ce que** l'au moins un élément d'éclairage est actionné lorsqu'un système de détection d'angle mort a détecté un véhicule en circulation dans l'angle mort du véhicule automobile.

7. Dispositif selon l'une quelconque des revendications précédentes, **caractérisé en ce que** l'au moins un élément d'éclairage est disposé dans une partie du rétroviseur extérieur orientée vers l'extérieur du véhicule.

8. Dispositif selon l'une quelconque des revendications précédentes, **caractérisé en ce que** le verre de rétroviseur est opaque et recouvert d'un film chauffant pour son dégivrage pendant l'hiver.

9. Dispositif selon l'une quelconque des revendications précédentes, **caractérisé en ce qu'**au moins un élément d'éclairage est encastré dans le boîtier du rétroviseur, de telle sorte qu'il éclaire au moins en partie le boîtier de rétroviseur.
